# EUROPÄISCHE PATENTSCHRIFT

(11) **EP 1 132 247 B1**
(45) Veröffentlichungstag und Bekanntmachung des Hinweises auf die Patenterteilung: **20.10.2004**
(21) Anmeldenummer: 01103908.8
(22) Anmeldetag: 17.02.2001
(51) Int. Cl.: B60K 15/04

(54) **Verschlussanordnung für einen Kraftstofftank eines Kraftfahrzeuges**
Closure arrangement for a fuel tank of a motor vehicle
Système de fermeture pour un réservoir de carburant pour véhicule automobile

(30) Priorität: 10.03.2000 GB 0005625
(43) Veröffentlichungstag der Anmeldung: 12.09.2001
(73) Patentinhaber: Bayerische Motoren Werke Aktiengesellschaft, 80809 München (DE)
(72) Erfinder: Stiegler, Ottmar, 82054 Sauerlach (DE); Doherty, Raymond Paul, Coventry CV4 9DS (GB)

(56) Entgegenhaltungen:
- EP-A- 0 342 679
- DE-U- 8 816 045
- GB-A- 752 246
- US-A- 5 901 760
- US-A- 5 931 206

## Beschreibung

Die vorliegende Erfindung betrifft eine Verschlussanordnung für einen Kraftstofftank eines Kraftfahrzeuges mit einem teilweise aus einem Kunststoffmaterial gefertigten Kugelelement, das in einem Kraftstoff-Einfüllstutzen montiert ist und einen durch das Kugelelement hindurch verlaufenden Durchgang sowie einen Verschlussabschnitt, der Bestandteil der Kugelelement-Außenfläche ist, aufweist, wobei das Kugelelement zwischen einer ersten Position, in welcher der Durchgang von außen zugänglich ist, und einer zweiten Position, in welcher der Verschlussabschnitt den Zugang zum Einfüllstutzen versperrt, verdrehbar ist, und wobei weiterhin eine zumindest eine Kraftstoffdämpfe-Dichtung aufweisende Dichtungsanordnung zwischen dem Kugelelement und dem Einfüllstutzen vorgesehen ist

Seit vielen Jahren ist es üblich, den Kraftstoff-Einfüllstutzen eines Fahrzeugs auf herkömmliche Weise mit einer einfachen Schraub- oder Bajonettverschlusskappe zu verschließen. Dies hat jedoch gewisse Nachteile. Ein Nachteil besteht darin, dass man die Kappe beim Befüllen des Kraftstofftanks leicht verlegen kann. Es wurden daher auch bereits Vorschläge gemacht, die Schraub- oder Bajonettverschlusskappe durch ein Kugelventil zu ersetzen, wie beispielsweise in US 5 901 760 oder DE-U-88 16 045 (diese Schrift wurde zur Bildung des Oberbegriffs des Patentanspruchs 1 herangezogen) beschrieben ist. Diese bekannten Systeme sind jedoch noch nicht in der Lage, künftigen Erfordernissen und gesetzlichen Vorschriften für äußerst emissionsarme Systeme gerecht zu werden.

Hiermit soll nun eine Verschlussanordnung nach dem Oberbegriff des Patentanspruchs 1 aufgezeigt werden, mit der auch die künftigen Emissionsvorschriften eingehalten werden können, d.h. die sich durch größtmögliche Dichtheit auszeichnet (= Aufgabe der vorliegenden Erfindung).

Die Lösung dieser Aufgabe ist dadurch gekennzeichnet, dass der Verschlussabschnitt aus einem anderen Material als das Kunststoff-Kugelelement besteht, wobei das Material des Verschlussabschnittes für Kraftstoffdämpfe undurchlässig ist, und wobei der Verschlussabschnitt am Kunststoff-Kugelelement befestigt ist und somit einen Bestandteil desselben bildet, derart, dass die Kraftstoffdämpfe-Dichtung am Verschlussabschnitt anliegt, wenn sich das Kugelelement in der geschlossenen Position befindet, so dass dann die Dichtungsanordnung und der Verschlussabschnitt den Kraftstoff-Einfüllstutzen vollständig abdichten. Vorteilhafte Aus- und Weiterbildungen sind Inhalt der Unteransprüche.

Analog dem bekannten Stand der Technik besteht das Kugelelement teilweise bzw. überwiegend aus einem Kunststoffmaterial, da hierdurch nicht nur ein relativ geringes Gewicht erzielbar ist, sondern da ein solches Kugelelement aus Kunststoff auch relativ einfach gefertigt werden kann, bspw. nach einem Spritzgussverfahren oder dgl. Jedoch sind die üblichen Kunststoffmaterialien, beispielsweise Nylon 6, für Kraftstoffdämpfe geringfügig durchlässig, so dass über einen längeren Zeitraum betrachtet eine geringe Menge von Kraftstoffdämpfen aus dem Kraftstofftank entweichen könnte, wenn das Kugelelement lediglich aus einem solchen Kunststoffmaterial bestehen würde. Damit können aber künftige Emissionsvorschriften nicht eingehalten werden.

Erfindungsgemäß besteht nun ein Teil der Kugel-Außenfläche, der als sog. Verschlussabschnitt fungiert, aus einem anderen Material als das Kugelelement, wobei dieses Material für Kraftstoffdämpfe undurchlässig ist. Wenn nun in der geschlossenen Position des Kugelelementes eine für Kraftstoff-Dämpfe im wesentlichen undurchlässige Dichtung (hier als Kraftstoffdämpfe-Dichtung bezeichnet) letztlich zwischen diesem sog. Verschlussabschnitt und dem Kraftstoff-Einfüllstutzen liegt (und dabei geeignet an die Dichtflächen angepresst wird), so ist eine optimale Abdichtung hergestellt, so dass auch über eine längere Zeitspanne keine Kraftstoffdämpfe aus dem Kraftstofftank in die Umgebung gelangen können.

Der Verschlussabschnitt kann als eigenständiges Bauelement ausgebildet und geeignet am Kugelelement bzw. am sog. Kunststoff-Grundkörper desselben befestigt sein. Bevorzugt kann ein solcher Verschlussabschnitt aus einem zunächst ebenen Element ausgeformt und danach an dem Kunststoff-Kugelelement durch Verkleben oder durch eine Schnappsicherung befestigt sein. Alternativ kann der undurchlässige Abschnitt aber auch als Beschichtung auf dem Kunststoff-Kugelelement ausgebildet sein, wobei lediglich sichergestellt sein muss, dass diese Beschichtung für Kraftstoffdämpfe absolut undurchlässig ist. Metalle haben diese Eigenschaft, so dass die besagte Beschichtung bspw. durch Verchromen erzeugt werden kann. Selbstverständlich kann auch ein eigenständiges Bauelement als Verschlussabschnitt in einfacher Weise aus einem metallischen Werkstoff hergestellt sein. Hingegen kann der übrige größte Teil des Kugelelementes mit Ausnahme des genannten Verschlussabschnittes aus einem einfachen Kunststoffmaterial bestehen, das durchaus für Kraftstoffdämpfe mehr oder weniger durchlässig sein kann.

Die Verschlussanordnung umfasst weiterhin eine Dichtungsanordnung, die zumindest eine sog. Kraftstoffdämpfe-Dichtung aufweist, also eine Dichtung, die für Kraftstoffdämpfe undurchlässig ist und diese somit sicher zurückhalten kann. Zumindest diese Kraftstoffdämpfe-Dichtung erstreckt sich dann, wenn das Kugelelement seine geschlossene Position einnimmt, zwischen dem Verschlussabschnitt und dem Kraftstoff-Einfüllstutzen, so dass diese Dichtungsanordnung und der Verschlussabschnitt dann den Einfüllstutzen vollständig gegenüber der Umgebung abdichten. Dabei befindet sich der Verschlussabschnitt vorzugsweise an der Außenseite des Kugelelementes, wenn dieses seine geschlossene Position einnimmt.

Die Dichtungsanordnung kann einen Dichtungsträger aufweisen, wobei die bereits genannte Kraftstoffdämpfe-Dichtung zwischen dem Dichtungsträger und dem Kugelelement (bzw. dem Veraschlussabschnitt desselben) vorgesehen ist, während sich zumindest eine weitere Dichtung zwischen dem Dichtungsträger und dem Einfüllstutzen befindet. Damit diese Dichtungsanordnung wirksam sein kann, sollten alle einzelnen Dichtelemente aus einem Material von relativ geringer Durchlässigkeit bestehen. Der Dichtungsträger selbst kann beispielsweise aus Metall, z.B. Aluminium, oder aus Kunststoffen von geringer Durchlässigkeit, z.B. "Acetal", bestehen, und die Dichtungen bestehen vorzugsweise aus PTFE, da dieses Material eine geringe Durchlässigkeit und geringe Reibung besitzt.

Bei den bisher bekannten Kugelventilsystemen bzw. Verschlussanordnungen für Kfz-Tanks mit einem Kugelelement besteht außerdem das Problem, dass diese schwierig zu montieren und zu warten sind. Zur Lösung dieser weiteren Problematik wird nun vorgeschlagen, dass das Kugelelement drehbar in einem Kugelträger gelagert ist und mit diesem sowie mit der genannten Dichtungsanordnung eine Baueinheit bildet, die in das freie Ende des Kraftstoff-Einfüllstutzens eingesetzt werden kann und danach mittels eines entfernbaren Sicherungsmittels, das am Einfüllstutzen befestigt werden kann, im Einfüllstutzen gesichert ist.

Die vorgeschlagene Verschlussanordnung besteht somit aus einem in den Einfüllstutzen einsetzbaren sog. Kugelträger und aus einem an diesem drehbar abgestützten Kugelelement, welches im Kugelträger montiert und mit diesem Kugelträger in den Einfüllstutzen eingesetzt werden kann. Weiterer Bestandteil dieser Anordnung ist bevorzugt die bereits genannte Dichtungsanordnung, die, um das Kugelelement im Kugelträger zu sichern, an diesem befestigt und mit diesem und dem Kugelelement in den Einfüllstutzen eingesetzt werden kann. Ferner wird ein sog. Sicherungsmittel vorgeschlagen, das am Einfüllstutzen befestigt werden kann, um so den Kugelträger und das Kugelelement im Einfüllstutzen (für Wartungszwecke weiterhin herausnehmbar) zu sichern.

Bevorzugt ist das Sicherungsmittel als eine auf das freie Ende des Einfüllstutzens aufbringbare Kappe ausgebildet, die eine Durchgangsöffnung aufweist, mit welcher der Durchgang im Kugelelement im wesentlichen zur Deckung gebracht werden kann. Die Kappe ist vorzugsweise entfernbar. Dadurch ist es möglich, den Verschluss für Wartungsarbeiten abzunehmen. Wenn das Kugelelement seine geschlossene Position einnimmt, so befindet sich der sog. Verschlussabschnitt mit seiner äußeren Oberfläche vorzugsweise auf annähernd gleicher Höhe mit der Kappe und dem Ende des Einfüllstutzens. Dies ermöglicht einen leichten Zugang zum Einfüllstutzen.

Weiterhin wird vorgeschlagen, in der Wand des Kraftstoff-Einfüllstutzens einen Durchbruch vorzusehen, durch den ein Antriebsmechanismus eingesetzt werden kann, um das Kugelelement im Kugelträger zu drehen. Wenn auch im Kugelträger ein korrespondierender Durchbruch vorgesehen ist, der zu demjenigen im Einfüllstutzen hin ausgerichtet ist, so kann der Antriebsmechanismus von außen hierdurch eingesetzt werden, um mit dem Kugelelement in Eingriff gebracht werden zu können. Somit ist also eine einfache Montage der gesamten Verschlussanordnung im Kraftstoff-Einfüllstutzen möglich.

Bevorzugte Ausführungsformen der vorliegenden Erfindung werden nunmehr lediglich beispielhaft unter Bezugnahme auf die beiliegenden Zeichnungen beschrieben. Dabei zeigt
- **Figur 1**: eine Schnittdarstellung eines Verschlusses gemäß einer ersten Ausführungsform in geschlossenen Zustand;
- **Figur 2**: eine Schnittdarstellung des Verschlusses von Figur 1 in geöffneten Zustand;
- **Figur 3**: eine Explosionsdarstellung des Verschlusses von Fig. 1, 2.
- **Figuren 4 und 5**: zeigen zwei verschiedene Schnittdarstellungen eines Verschlusses gemäß einer zweiten Ausführungsform der Erfindung.

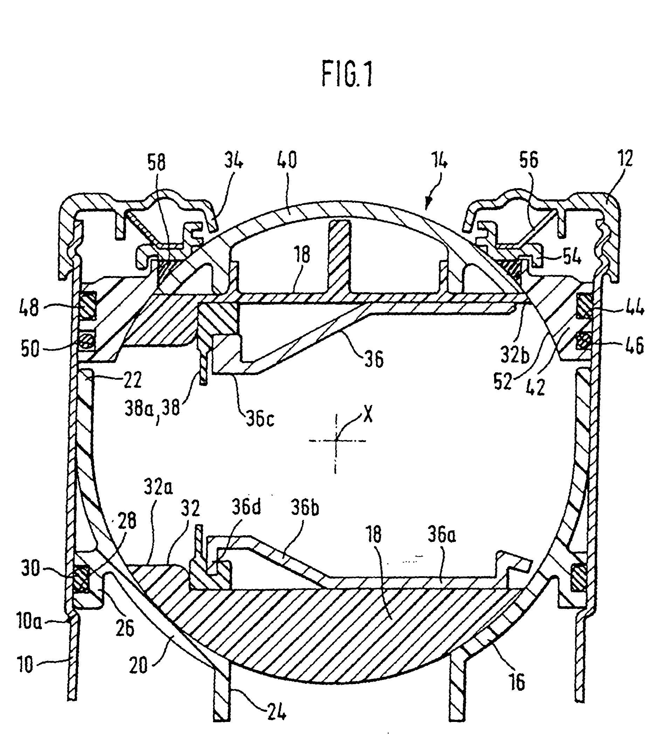

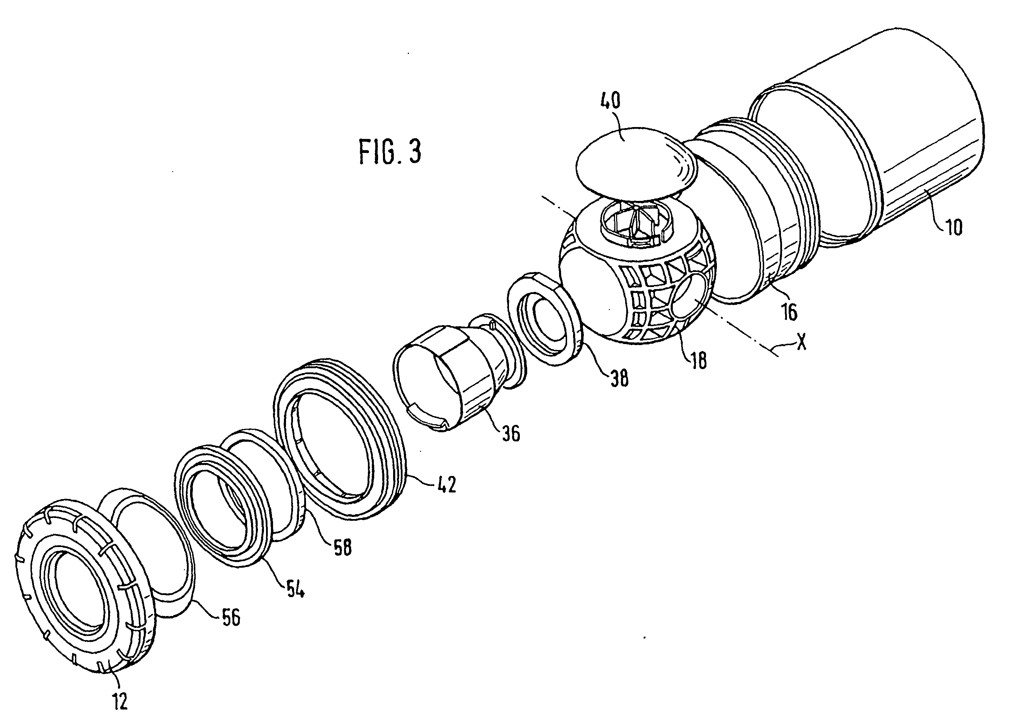

Bezugnehmend auf die Figuren 1 und 3 besteht in einer ersten Ausführungsform der vorliegenden Erfindung ein Einfüllrohr eines nicht dargestellten Fahrzeug-Kraftstofftanks aus Stahl und umfasst an seinem freien Ende einen sog. Einfüllstutzen 10, auf dessen Ende eine Schraubgewinde-End-Kappe 12 aufgebacht ist und in den unmittelbar unterhalb der Kappe 12 ein Kugelventil 14 eingesetzt ist. Das Kugelventil 14 umfasst einen bspw. durch Spritzgießen geformten Kunststoffkugelträger 16, der ein bspw. ebenfalls spritzgeformtes Kunststoff-Kugelelement 18 trägt.

Der Kugelträger 16 besteht im wesentlichen aus einer halbkugeligen Schüssel 20, die zum freien Ende des Einfüllstutzens 10 hin offen ist und die mit ihrem Rand 22 an der Innenseite des Einfüllstutzens 10 anliegt sowie eine durch ihr Zentrum verlaufende Öffnung 24 aufweist. Etwa auf der Hälfte zwischen dem Rand 22 und der Öffnung 24 ist ein Flansch 26 vorgesehen, der sich von der Außenfläche der Schüssel 20 aus quasi in Radialrichtung bezüglich des im Querschnitt kreisförmigen Einfüllstutzens 10 nach außen erstreckt, wobei der Flansch 26 eine in seiner Außenfläche ausgebildete Nut 28 aufweist, in die eine Ringdichtung 30 eingesetzt ist. Der Rand des Flansches 26 steht in Kontakt mit der Innenfläche des Einfüllstutzens 10 und legt daher den Kugelträger 16 im Einfüllstutzen 10 fest. Der Kugelträger 16 liegt dabei auch an einer Stufe 10a im Einfüllstutzen 10 an, um ein weiteres Herunterrutschen des Kugelträgers 16 in den Einfüllstutzen 10 hinein (in der Figur nach unten) zu verhindern.

Das Kugelelement 18 weist eine allgemein kugelige Form auf und besitzt einen zentral hindurch verlaufenden Durchgang 32, wobei ein inneres Ende 32a im wesentlichen den gleichen Durchmesser wie die durch den Kugelträger 16 verlaufende Öffnung 24 aufweist, sowie ein äußeres Ende 32b, das im wesentlichen den gleichen Durchmesser wie die zentrale Öffnung 34 besitzt, die durch die Kappe 12 verläuft. Ein rohrförmiger sog. Zapfpistolenrestriktor 36 ist im Innern des Durchgangs 32 vorgesehen, der einen größeren Abschnitt 36a an seinem äußeren Ende, das passend an der Innenfläche des Durchgangs 32 anliegt, sowie einen sich demgegenüber verengenden kegelförmigen Abschnitt 36b umfasst, dessen Durchmesser sich zu seinem inneren Ende hin, das eine für eine Tank-Zapfpistole vorgesehene verengende Öffnung 36c mit einem nach außen verlaufenden Flansch 36d an seinem Ende definiert, verringert. Eine passend über dem Flansch 36d anliegende Zapfpistolendichtung 38 dichtet den Flansch 36d zur Innenwand des Durchgangs 32 hin ab und weist eine Lippe 38a auf, die sich radial nach innen jenseits des Endes des Zapfpistolenrestriktors 36 in die Innenfläche der für die Zapfpistole vorgesehenen verengten Öffnung 36c hinein erstreckt.

Ein Teil der gekrümmten Außenfläche des Kugelelements 18 ist durch einen sog. Verschlussabschnitt 40 gebildet. Dieser Verschlussabschnitt 40 ist angepasst an die Form des Kugelelementes 18 gewölbt oder teilkugelförmig und bildet einen Oberflächen-Bestandteil des Kugelelementes 18, der größer als die Fläche der Öffnung 34 in der Kappe 12 ist.

Ein ringförmiger bspw. ebenfalls durch Kunststoffspritzen geformter Dichtungsträger 42 befindet sich im Innern des Einfüllstutzens 10 zwischen dem Kugelträger 16 und der Kappe 12. Er weist zwei Nuten 44, 46 in seiner Außenfläche auf, wobei die Nut 44, die der Kappe 12 am nächsten liegt, eine erste Dichtung 48 aus PTFE und die Nut 46, die dem Kugelträger 16 am nächsten liegt, eine zweite Ringdichtung 50 aufnimmt. Die Innenfläche 52 des Dichtungsträgers 42 läuft zum oberen Ende der gesamten Einheit hin sich kuppelförmig verengend zu und ist dabei bogenförmig ausgebildet, so dass sie an der Oberfläche des Kugelelementes 18 passend anliegt und dieses abstützt.

Eine ringförmige sog. Staubdichtung 54 befindet sich unmittelbar unterhalb der Kappe 12 und weist einen größeren Durchmesser als die durch die Kappe 12 verlaufende Öffnung 34 auf. Ein Federring 56 zwischen der Kappe 12 und der Staubdichtung 54 bewirkt, dass die Staubdichtung 54 gegen die Oberfläche des Kugelelementes 18 gedrückt wird. Eine für Kraftstoffdämpfe praktisch undurchlässige Dichtung, die im weiteren als Kraftstoffdämpfe-Dichtung 58 bezeichnet wird, und die aus PTFE besteht, befindet sich zwischen dem Dichtungsträger 42 und der Staubdichtung 54 und wird dort durch die Kraft des auf die Staubdichtung 54 wirkenden Federrings 56 gehalten. Der Durchmesser der Kraftstoffdämpfe-Dichtung 58 ist dabei geringer als derjenige des Verschlussabschnittes 40 des Kugelelementes 18, so dass die radial innerhalb der Kraftstoffdämpfe-Dichtung 58 liegende Öffnung vollständig vom Verschlussabschnitt 40 abgedeckt und somit verschlossen ist, wenn sich das Kugelelement 18, wie in Figur 1 dargestellt, in der das Kugelventil 14 sperrenden oder schließenden Position befindet.

Das Kugelelement 18 wird von einem hier nicht dargestellten Paar von Scharnierzapfen im Kugelträger 16 abgestützt, so dass das Kugelelement 18 um die in Fig.1 senkrecht zur Zeichenebene verlaufende Achse X (= Achse der nicht dargestellten Scharnierzapfen) drehbar ist. Diese Achse X verläuft auch senkrecht zur in Fig.1 in der Zeichenebene verlaufende Längsachse des Durchgangs 32 durch das Kugelelement 18, und diese beiden genanten Achsen verlaufen auch senkrecht zu der durch das Zentrum des Verschlussabschnittes 40 verlaufenden Achse, nachdem dieser Verschlussabschnitt 40 quasi ein Kugelsegment darstellt, dessen Achse der zentrale Radienstrahl der entsprechenden Kugel ist. Weiterhin verläuft die Dreh-Achse X des Kugelelementes 18 auch senkrecht zur Achse des Einfüllstutzens 10. Im übrigen ist zumindest einer der beiden einander gegenüberliegenden Scharnierzapfen mit einem geeigneten Durchbruch oder Loch im Einfüllstutzen 10 gleichgerichtet, so dass ein geeignetes Antriebsmittel durch die Seite des Einfüllstutzens 10 in das Kugelelement von außen eingefügt und danach bzw. damit das Kugelelement 18 entweder mittels eines Motors oder manuell mittels eines geeigneten Hebels um die Achse X gedreht oder verschwenkt werden kann.

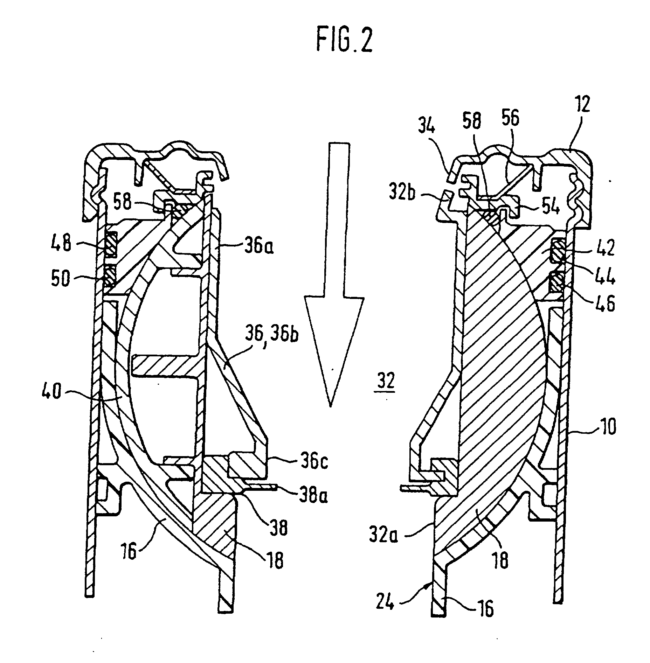

Wie aus Figur 2 ersichtlich wird, ist der Durchgang 32, wenn das Kugelventil 14 durch entsprechende Drehung des Kugelelementes 18 geöffnet ist, zur Öffnung 34 in der Kappe 12 hin ausgerichtet, wobei die Kraftstoffdämpfe-Dichtung 58 am in der Zeichnung linksseitigen Abschnitt am Kugelelement 18 unmittelbar außerhalb des oberen Endes des Zapfpistolenrestriktors 36 anliegt. Dabei kann eine Tank-Zapfpistole durch den Durchgang 32 gemäß dem dargestellten Pfeil von außen her nach unten geschoben werden, bis ihr unteres Ende die Öffnung 36c am unteren Ende des Zapfpistolenrestriktors 36 passiert hat. Dort bewirkt die Dichtung 38 eine Abdichtung gegenüber der figürlich nicht dargestellten Zapfpistole, wodurch verhindert wird, dass Kraftstoffdämpfe durch den Durchgang 32 nach außen in die Umgebung (und somit entgegen der in Fig.2 dargestellten Pfeilrichtung) zurückströmen können.

Wenn das Ventil geschlossen ist, wie in Figur 1 dargestellt, befindet sich der erfindungsgemäß für Kraftstoffdämpfe absolut undurchlässige Verschlussabschnitt 40 des Kugelelementes 18 bzw. des Kugelventils 14 an dessen Außenseite. Im Zusammenwirken zwischen diesem Verschlussabschnitt 40 mit dem Dichtungsträger 42, der den Zwischenraum zwischen dem Verschlussabschnitt 40 und dem Einfüllstutzen 10 ausfüllt, sowie mit der Kraftstoffdämpfe-Dichtung 58, die den Dichtungsträger 42 gegenüber dem Verschlussabschnitt 40 abdichtet, sowie mit der Dichtung 48, die den Dichtungsträger 42 gegenüber dem Einfüllrohr 10 abdichtet und die ebenfalls praktisch undurchlässig gegenüber Kraftstoffdämpfen ist, wird somit am freien Ende des Einfüllstutzens 10 eine für Kraftstoffdämpfe im wesentlichen undurchlässige Barriere gebildet.

Der wesentliche Vorteil dieser erfindungsgemäßen Verschlussanordnung besteht darin, dass Kraftstoffdämpfe, die sich aus nach dem Tankvorgang im Durchgang 32 verbliebenem Kraftstoff entwickeln, nicht entweichen können. Selbstverständlich werden auch sämtliche Kraftstoffdämpfe im Kraftstofftank selbst zurückgehalten, d.h. davon abgehalten, in die Umgebung nach außen zu entweichen. Ein weiterer Vorteil der Verschlussanordnung besteht darin, dass die gesamte Baueinheit aufgrund der als Schraubkappe ausgebildeten Kappe 12 für Wartungsarbeiten leicht entfernt und wieder eingesetzt werden kann. Um die Wartungsarbeiten zu erleichtern, können der Dichtungsträger 42 und der Kugelträger 16 so ausgebildet bzw. angeordnet werden, dass eine gegenseitige Verriegelung erfolgt, beispielsweise durch einen einfachen Schnappmechanismus, so dass sich die gesamte Baueinheit als Moduleinheit aus dem Einfüllstutzen 10 herausheben lässt.

Da sich außerdem die Außenseite des Kugelelementes 18 in etwa auf gleicher Höhe mit dem freien (oberen) Ende des Einfüllstutzens 10 und der Kappe 12 und damit auch mit dem Karosserieaußenblech des Fahrzeugs befindet, muss der Einfüllstutzen 10 nicht notwendigerweise senkrecht zum Karosserieaußenblech ausgerichtet sein, ohne dass um den Einfüllstutzen 10 herum eine große Einfülltasche für den Zugang einer Zapfpistole vorzusehen ist. Durch Verwendung einer Kugelventilausführung und deren Einbau in der Nähe des Fahrzeugkarosserieaußenblechs ist diese Anordnung auch für das Betanken mittels eines Roboters besonders geeignet.

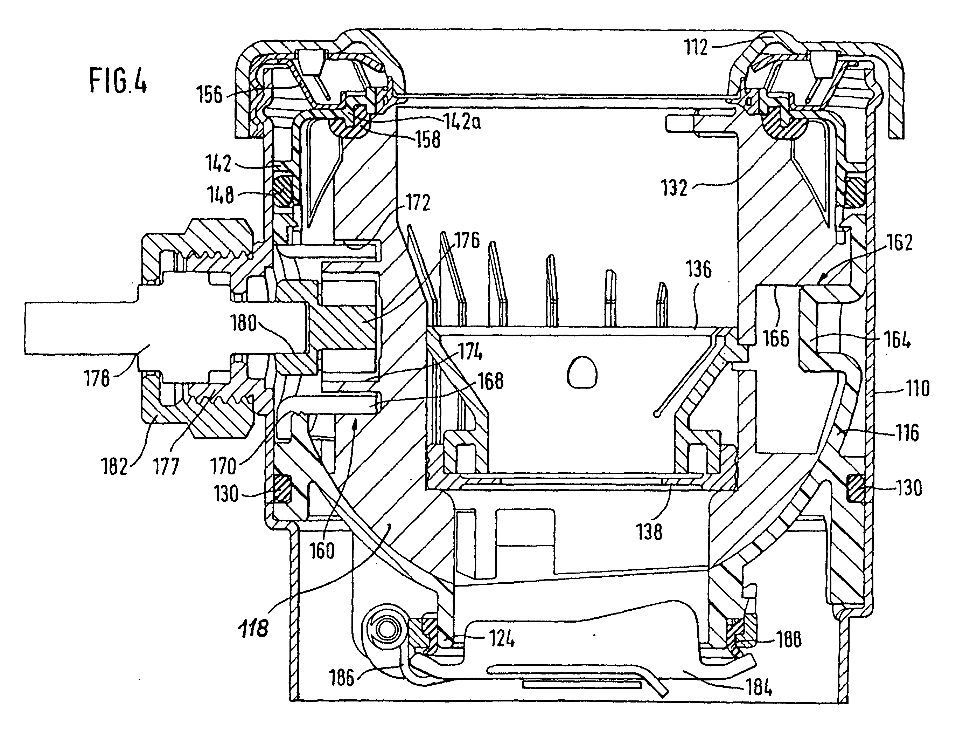

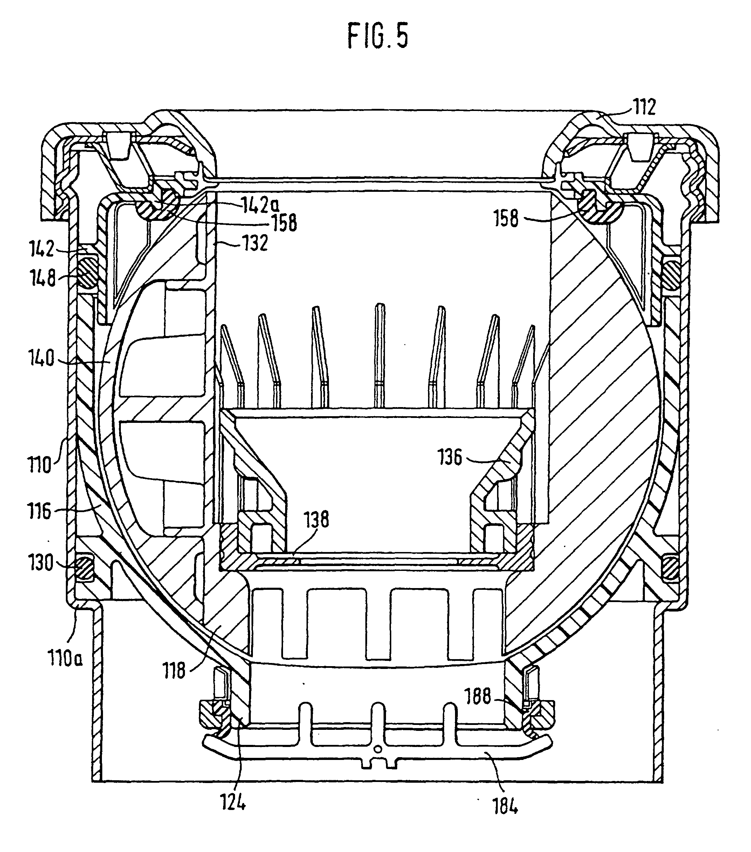

In den Figuren 4 und 5 ist eine zweite Ausführungsform der vorliegenden Erfindung dargestellt. Diese entspricht teilweise der Ausführungsform der Figuren 1 bis 3, und entsprechende Teile sind durch die gleichen Bezugskennzahlen mit einer vorangestellten 1 gekennzeichnet. Um Wiederholungen zu vermeiden, werden lediglich diejenigen Merkmale der zweiten Ausführungsform beschrieben, die sich von der ersten Ausführungsform unterscheiden.

Der Dichtungsträger 142 ist gegenüber dem zuerst erläuterten Ausführungsbeispiel in dünnerem Material ausgeführt, wobei die Staubdichtung der ersten Ausführungsform in diesen Dichtungsträger 142 integriert ist. Eine Sicherungsfeder 156 ist zwischen der Kappe 112 und dem Dichtungsträger 142 wirksam. Die sog Kraftstoffdämpfe-Dichtung 158, die für Kraftstoffdämpfe praktisch undurchlässig ist, liegt passend über einer Rippe 142a am Dichtungsträger 142 an. Es ist nur eine Ringdichtung 148 zwischen dem Dichtungsträger 142 und dem Einfüllstutzen 110 vorgesehen und diese besteht aus mit PTFE beschichtetem Gummi, um ebenfalls praktisch undurchlässig für Kraftstoffdämpfe zu sein.

Figur 4 zeigt als geeignete Schnittdarstellung auch die in Verbindung mit der ersten Ausführungsform bereits erwähnten (dort jedoch figürlich nicht dargestellten) sog. Scharnierzapfen 160, 162, über die das Kugelelement 118 im Kugelträger 116 drehbar gelagert oder abgestützt ist. Einer der beiden einander gegenüberliegenden Scharnierzapfen 162 ist als ein einfacher Innenvorsprung 164 am Kugelträger 116 ausgebildet, der sich in eine entsprechende Buchse 166 in der Seite der Kugel 118 hineinerstreckt.

Der andere Scharnierzapfen 160 besteht unter anderem aus einem separaten rohrförmiges Zapfenelement 168, das in Schnappverbindung mit einer Öffnung 170 im Kugelträger 116 steht und sich in eine ringförmige Nut 172 im Kugelelement 118 hinein erstreckt. Dabei weist diese Nut 172 ein Innenkeilprofil 174 auf, in welches ein entsprechend gestalteter vorzugsweise metallischer Mitnehmer 176 hineinragt. Das Zapfenelement 168 und der Mitnehmer 176 ragen in radialer Richtung betrachtet nicht nach außen über den Außenumfang des Kugelträgers 116 hinaus und können daher zusammen mit dem Kugelträger 116 in den Einfüllstutzen 110 eingesetzt werden. Eine ebenfalls über eine Keil-Nut-Verbindung in eine sog. Keilausnehmung 180 an der Außenseite des Mitnehmers 176 eingepasste Antriebsspindel 178 ist in einem mit einem Außengewinde versehenen rohrförmigen Stützabschnitt 177, der aus dem Einfüllstutzen 110 herausragt, drehbar abgestützt. Eine Mutter 182 ist auf den Stützabschnitt 177 aufgeschraubt, um die Antriebsspindel 178 in ihrer Position zu sichern. Die beiden genanten das Kugelelement 118 und den Mitnehmer 176 miteinander verbindenden Keil-Nut-Verbindungen weisen dabei relativ massive Keile bzw. Nuten auf, um die auf das Kugelelement 118 einwirkenden Kräfte gleichmäßig und günstig zu verteilen. Im übrigen ist ein die Drehung der Antriebsspindel 178 bewirkender Mechanismus nicht dargestellt, jedoch kann es sich hierbei bspw. um einen Elektromotor oder einen manuell betätigbaren Hebel handeln.

Die Figuren 4 und 5 zeigen auch eine Restriktorklappe 184 (auch Bleifrei-Klappe genannt), die die Öffnung 124 an der Innenseite des Kugelträgers 116 abdeckt, und die in ihrer geschlossenen Position durch eine Feder 186 vorgespannt und gegenüber dem Rand der Öffnung 124 durch eine Lippendichtung 188 abgedichtet ist. Ein ähnlicher Restriktor könnte auch für die erste Ausführungsform verwendet werden, obwohl er in den Figuren 1 bis 3 nicht dargestellt ist.

Um den Verschluß in den Einfüllstutzen 110 einzubauen, werden der Restriktor 136 und die Zapfpistolendichtung 138 in das Kugelelement 118 eingebaut, welches danach so in den Kugelträger 116 eingesetzt wird, dass eine Abstützung über den Innenvorsprung 164 erfolgen kann. Das ring- oder rohrförmige Zapfenelement 168 und der Mitnehmer 176 werden danach durch den Durchbruch oder die Öffnung 170 im Kugelträger 116 in das Kugelelement 118 eingeführt, wobei das Zapfenelement 168 in eine Schnappverbindung gebracht wird, wodurch das Kugelelement 118 im Kugelträger 116 gelagert bzw. gesichert ist.

Anschließend kann der Dichtungsträger 142 mit den daran befindlichen Dichtungen 148, 158 am Kugelträger 116 befestigt werden. Die Feder 156 wird dann an der Kappe 112 vormontiert. Anschließend kann die aus dem Kugelträger 116, dem Kugelelement 118 und der Dichtung 142 bestehende Anordnung als Einheit in den Einfüllstutzen 110 eingesetzt und die Kappe 112 aufgeschraubt werden, um diese Einheit in ihrer Position zu sichern. Dann werden die Antriebsspindel 178 und die Sicherungsmutter 182 eingebracht und aufgeschraubt, wonach die Montage abgeschlossen ist. Wenn zu einem späteren Zeitpunkt an der beschriebenen Verschlussanordnung Wartungsarbeiten durchgeführt werden müssen, kann die Kappe 112 abgeschraubt und die Antriebsspindel 178 entfernt werden, wonach das beschriebene Kugelventil in seiner Gesamtheit aus dem Einfüllstutzen 110 herausgenommen werden kann, um nach Bedarf repariert oder ersetzt zu werden.

Es versteht sich, dass es aufgrund der Modulstruktur der beschriebenen Kugelventil-Baueinheiten möglich ist, eine einzelne Kugelventilausführung für eine Reihe von Fahrzeugen zu verwenden. Die einzige Voraussetzung besteht darin, dass die innere Form des Endes der individuellen Einfüllstutzen im wesentlichen die gleiche ist. Die beschriebene Verschlussanordnung kann im übrigen für Einfüllstutzen aus beliebigen geeigneten Materialien, beispielsweise Metallen wie Aluminium oder nichtdurchlässigen Kunststoffen zum Einsatz kommen. Wesentlich ist die geeignete Materialauswahl für den grundsätzlich gegenüber dem Kugelelement 18 bzw. 118 eigenständigen Verschlussabschnitt 40 bzw. 140 desselben, wobei noch darauf hingewiesen sei, dass durchaus eine Vielzahl von Details insbesondere konstruktiver Art abweichend von den Ausführungsbeispielen gestaltet sein kann, ohne den Inhalt der Patentansprüche zu verlassen.

## Patentansprüche

1. Verschlussanordnung für einen Kraftstofftank eines Kraftfahrzeuges mit einem teilweise aus einem Kunststoffmaterial gefertigten Kugelelement (18), das in einem Kraftstoff-Einfüllstutzen (10) montiert ist und einen durch das Kugelelement (18) hindurch verlaufenden Durchgang (32) sowie einen Verschlussabschnitt (40), der Bestandteil der Kugelelement-Außenfläche ist, aufweist, wobei das Kugelelement (18) zwischen einer ersten Position, in welcher der Durchgang (32) von außen zugänglich ist, und einer zweiten Position, in welcher der Verschlussabschnitt (40) den Zugang zum Einfüllstutzen (10) versperrt, verdrehbar ist, und wobei weiterhin eine zumindest eine Kraftstoffdämpfe-Dichtung (58) aufweisende Dichtungsanordnung zwischen dem Kugelelement (18) und dem Einfüllstutzen (10) vorgesehen ist,
**dadurch gekennzeichnet, dass** der Verschlussabschnitt (40) aus einem anderen Material als das Kunststoff-Kugelelement (18) besteht, wobei das Material des Verschlussabschnittes für Kraftstoffdämpfe undurchlässig ist, und wobei der Verschlussabschnitt (40) am Kunststoff-Kugeleiement (18) befestigt ist und somit einen Bestandteil desselben bildet, derart, dass die Kraftstoffdämpfe-Dichtung (58) am Verschtussabschnitt (40) anliegt, wenn sich das Kugelelement (18) in der geschlossenen Position befindet, so dass dann die Dichtungsanordnung und der Verschlussabschnitt (40) den Kraftstoff-Einfüllstutzen (10) vollständig abdichten.

2. Verschlussanordnung nach Anspruch 1,
**dadurch gekennzeichnet, dass** der Verschlussabschnitt (40) als ein eigenständiges Bauelement im wesentlichen in Form eines Kugelsegmentes ausgebildet und aus einem metallischen Werkstoff gefertigt ist.

3. Verschlussanordnung nach Anspruch 1 oder 2,
**dadurch gekennzeichnet, dass** die Dichtungsanordnung neben der Kraftstoffdämpfe-Dichtung (58) einen Dichtungsträger (42) aufweist, wobei die Kraftstoffdämpfe-Dichtung (58) zwischen dem Dichtungsträger (42) und dem Kugelelement (18) vorgesehen ist, während sich zumindest eine weitere Dichtung (48, 50) zwischen dem Dichtungsträger (42) und dem Einfüllstutzen (10) befindet.

4. Verschlussanordnung nach einem der vorangegangenen Ansprüche,
**dadurch gekennzeichnet, dass** das Kugelelement (18) in einem Kugelträger (16) gelagert ist und mit diesem sowie mit der genannten Dichtungsanordnung eine Baueinheit bildet, die in das freie Ende des Einfüllstutzens (10) eingesetzt werden kann und danach mittels eines entfernbaren Sicherungsmittels (12), das am Einfüllstutzen (10) befestigt werden kann, im Einfüllstutzen (10) gesichert ist.

5. Verschlussanordnung nach Anspruch 4,
**dadurch gekennzeichnet, dass** das Sicherungsmittel als eine auf das freie Ende des Einfüllstutzens (10) aufbringbare Kappe (12) ausgebildet ist, die eine Durchgangsöffnung (34) aufweist, mit welcher der Durchgang (32) im Kugelelement (18) im wesentlichen zur Deckung gebracht werden kann.

6. Verschlussanordnung nach einem der vorangegangenen Ansprüche, **dadurch gekennzeichnet, dass** in der Wand des Kraftstoff-Einfüllstutzens (10, 110) ein Durchbruch vorgesehen ist, durch den ein Antriebsmechanismus (176, 178) eingesetzt werden kann, um das Kugelelement (18, 118) im Kugelträger (16, 116) zu drehen, und daß
auch im Kugelträger (16, 116) ein Durchbruch vorgesehen ist, der zu demjenigen im Einfüllstutzen (10, 110) hin ausgerichtet ist, so dass der Antriebsmechanismus (176, 187) hierdurch eingesetzt werden kann, um mit dem Kugelelement (18, 118) in Eingriff gebracht werden zu können.

## Claims

1. A closure arrangement for a fuel tank of a motor vehicle, comprising a ball element (18) made partly of a plastic and fitted in a fuel filler neck (10), a passage (36) through the ball element (18) and a closure portion (40) forming part of the outer surface of the ball element, wherein the ball element (18) is rotatable between a first position in which the passage (32) is accessible from the exterior and a second position in which the closure portion (40) blocks access to the filler neck (10), and wherein a sealing arrangement comprising at least one fuel-vapour seal (58) is provided between the ball element (18) and the filler neck (10),
**characterised in that** the closure portion (40) is made from a different material from the plastic ball element (18), wherein the closure portion is made of a material impermeable to fuel vapour and wherein the closure portion (40) is fastened to the plastic ball element (18) and thus forms a component thereof such that the fuel vapour seal (58) abuts the closure portion (40) when the ball element (18) is in the closed position, so that the sealing arrangement and the closure portion (40) then completely seal the filler neck (10).

2. A closure arrangement according to claim 1, **characterised in that** the closure portion (40) is an independent structural component substantially in the form of a ball segment and made of a metal material.

3. A closure arrangement according to claim 1 or 2, **characterised in that** in addition to the fuel vapour seal (58), the sealing arrangement comprises a seal-holder (42), wherein the fuel vapour seal (58) is disposed between the seal-holder (42) and the ball element (18) and at least one additional seal (48, 50) is provided between the seal holder (42) and the filler neck (10).

4. A closure arrangement according to any of the preceding claims, **characterised in that** the ball element (18) is mounted in a ball holder (16) and in co-operation therewith and with the said sealing arrangement forms a structural unit which can be inserted into the free end of the filler neck (10) and secured therein by a removable securing means (12) which can be fastened to the filler neck (10).

5. A closure arrangement according to claim 4, **characterised in that** the securing means is a cap (12) which can be mounted on the free end of the filler neck (10) and has a passage opening (34) which can be substantially aligned with the passage (32) in the ball element (18).

6. A closure arrangement according to any of the preceding claims, **characterised in that** the wall of the filler nozzle (10, 110) is formed with an aperture through which a drive mechanism (176, 178) can be inserted in order to rotate the ball element (18, 118) in the ball holder (16, 116), and **in that** the ball holder (16, 116) is also formed with an aperture which is aligned with the aperture in the filler neck (10, 110) so that the drive mechanism (167, 187) can be inserted through it and brought into engagement with the ball element (18, 118).

## Revendications

1. Système de fermeture destiné à un réservoir à carburant d'un véhicule automobile et comportant un élément sphérique (18) fabriqué en partie en un matériau synthétique, monté dans un goulot de remplissage à carburant (10) et muni d'un passage (32) qui s'étend à travers l'élément sphérique (18) ainsi que d'un segment de fermeture (40) qui est une partie constitutive de la surface extérieure de l'élément sphérique ; l'élément sphérique (18) peut tourner entre une première position où le passage (32) est accessible de l'extérieur et une deuxième position où le segment de fermeture (40) bloque l'accès au goulot de remplissage (10) et en outre un dispositif de garniture qui présente au moins une garniture à vapeurs de carburant (58) est prévu entre l'élément sphérique (18) et le goulot de remplissage (10),
**caractérisé en ce que**
le segment de fermeture (40) est en un autre matériau que l'élément sphérique (18) en matière synthétique, le matériau du segment de fermeture étant imperméable aux vapeurs de carburant, et le segment de fermeture (40) est alors fixé à l'élément sphérique (18) en matière synthétique et fait donc partie de celui-ci de telle manière que la garniture à vapeurs de carburant (58) s'applique au segment de fermeture (40) lorsque l'élément sphérique se trouve en position fermée, de sorte que l'arrangement de garniture et le segment de fermeture (40) rendent alors entièrement étanche le goulot de remplissage à carburant (10).

2. Système de fermeture selon la revendication 1,
**caractérisé en ce que**
le segment de fermeture (40) est conçu en tant qu'unité structurelle autonome pratiquement sous forme d'un segment sphérique et est fabriqué en un matériau métallique.

3. Système de fermeture selon la revendication 1 ou 2,
**caractérisé en ce que**
le dispositif de garniture, outre la garniture à vapeurs de carburant (58), présente un support de garniture (42) ; la garniture à vapeurs de carburant (58) est prévue entre le support de garniture (42) et l'élément sphérique (18) tandis qu'au moins une autre garniture (48, 50) se trouve entre le support de garniture (42) et le goulot de remplissage (10).

4. Système de fermeture selon l'une des revendications précédentes,
**caractérisé en ce que**
l'élément sphérique (18) est monté dans un support sphérique (16) et forme avec celui-ci ainsi qu'avec ledit arrangement de garniture une unité structurelle qui peut être insérée dans l'extrémité libre du goulot de remplissage (10) puis être maintenue dans le goulot de remplissage (10) à l'aide d'un moyen de maintien (12) amovible qui peut être fixé au goulot de remplissage (10).

5. Système de fermeture selon la revendication 4,
**caractérisé en ce que**
le moyen de maintien est conçu sous forme de capuchon (12) qu'on peut poser sur l'extrémité libre du goulot de remplissage (10) et qui présente une ouverture de passage (34) grâce à laquelle le passage (32) dans l'élément sphérique (18) peut être recouvert.

6. Système de fermeture selon l'une des revendications précédentes,
**caractérisé en ce qu'**
on prévoit dans la paroi du goulot de remplissage à carburant (10, 110) un orifice à travers lequel un mécanisme d'entraînement (176, 178) peut être inséré pour faire tourner l'élément sphérique (18, 118) dans le support sphérique (16, 116) et on prévoit aussi dans le support sphérique (16, 116) un orifice orienté vers celui qui est situé dans le goulot de remplissage (10, 110) de telle sorte que le mécanisme d'entraînement (176, 187) puisse y être passé pour pouvoir l'engrener à l'élément sphérique (18, 118).
